# EUROPEAN PATENT APPLICATION

(11) **EP 2 573 918 A2**
(43) Date of publication of application: **27.03.2013**
(21) Application number: 12183712.4
(22) Date of filing: 10.09.2012
(51) Int. Cl.: H02K 41/02, H02K 1/18

(54) **Stator core and stator**

(30) Priority: 22.09.2011 JP 2011207605
(71) Applicant: Sanyo Denki Co., Ltd., Tokyo 170-8451 (JP)
(72) Inventor: Tang, Yuqi, Tokyo, 170-8451 (JP); Sugita, Satoshi, Tokyo, 170-8451 (JP)
(74) Representative: McCartney, Jonathan William

(57) **Abstract**

The present invention provides a stator core and a stator for a cylinder linear motor at low cost, in which slot pitches can be determined accurately. A stator core for use in a cylinder linear motor has a positioning rod 48 and a plurality of core bodies 42. The positioning rod 48 extends in a rod shape, and a plurality of recesses 480 are formed at predetermined intervals in the extension direction. The plurality of core bodies 42 are formed in a flat plate shape, and a hole 421 in which a movable element can be inserted is formed in a direction orthogonal to the flat plate. In the outer circumference of the plurality of core bodies 42, fitting parts 422 which fit in the recesses 480 are provided. When the fitting parts 422 fit in the recesses 480, the core bodies 142 are positioned at predetermined intervals.

## Description

### BACKGROUND OF THE INVENTION

### Technical Field

The present invention relates to a stator core and a stator applied to a cylinder linear motor.

### Description of Related Art

A motor is used in various applications. For example, various motors are used for driving industrial robots. Motors include a rotary motor which rotates and a linear motor which moves linearly. As a kind of linear motors, a cylinder linear motor in which a movable element is disposed in a stator and which moves linearly is known (refer to Unexamined Japanese Patent Application Kokai Publication No. 2001-286122).

In a cylinder linear motor disclosed in the patent document, a stator core is formed so that it can be divided in the axial direction. Each of stator divided bodies has an annular disc and an annular projection provided in the outer circumference of the disc. The annular projection projects in the axial direction and has a coupling structure of coupling the outer circumferences of the stator divided bodies. A space surrounded by the projections and the disc is a space (slot) for disposing a winding coil between the stator divided bodies. By the length of the projection, the slot pitch is determined accurately.

In the cylinder linear motor disclosed in the patent document 1, however, the projection formed in each of the stator divided bodies has the coupling structure, so that the shapes of the stator dividedbodies are complicated. There is consequently a technical problem of high manufacture cost.

### SUMMARY

The present invention has been achieved in consideration of the above circumferences and an object of the present invention is to provide, at low cost, a stator core and a stator for a cylinder linear motor, in which slot pitch can be accurately determined.

A stator core for use in a cylinder linear motor includes a positioning rod and a plurality of core bodies. The positioning rod extends in a rod shape, and a plurality of first fitting parts are formed at predetermined intervals in the extension direction in the positioning rod. Each of the plurality of core bodies is formed in a flat plate shape and a hole through which a movable element can be inserted is formed in a direction orthogonal to the flat plate. In an outer circumference of the plurality of core bodies, second fitting parts which fit in the first fitting parts are provided. When the second fitting parts are fit in the first fitting parts, the core bodies are positioned at the predetermined intervals.

### BRIEF DESCRIPTION OF THE DRAWINGS

FIG. 1 is a partial cross section showing an example of a cylinder linear motor.
FIG. 2 is an exploded perspective view of a stator.
FIG. 3 is a cross section of the stator.
FIG. 4 is a front view of the stator seen from the arrow direction of FIG. 3.
FIG. 5 is a perspective view of a center core body disposed in the center.
FIG. 6 is an exploded perspective view of the center core bodies.
FIG. 7 is a perspective view of end-part core bodies disposed at both ends.
FIG. 8 is a perspective view of a winding coil.
FIG. 9 is a perspective view of a positioning rod.
FIG. 10 is a perspective view showing a state of attaching components to a core member.
FIG. 11 is a perspective view showing a state of assembling a core assembly on the core member.
FIG. 12 is a perspective view of the core assembly assembled on the core member.
FIG. 13 is a perspective view showing a state of inserting the core assembly with the core member into a frame.
FIG. 14 is a diagram showing a state where resin is poured in the frame.
FIG. 15 is a perspective view showing an end-part core body of a second embodiment.
FIG. 16 is a perspective view of a positioning rod of the second embodiment.
FIG. 17 is a perspective view showing a center core body of a third embodiment.
FIG. 18 is a perspective view showing a process of assembling a core assembly.
FIG. 19 is a perspective view showing a state of assembling the core assembly.
FIG. 20 is a perspective view showing a state of attaching a cover to the core assembly.

### DETAILED DESCRIPTION OF THE EMBODIMENTS

Hereinafter, with reference to the appended drawings, embodiments of the present invention will be described. In description of the drawings, the same reference numerals are designated to the same elements and repetitive description will not be given. The dimensional proportions in the drawings may be exaggerated for convenience of explanation and different from the actual proportions.

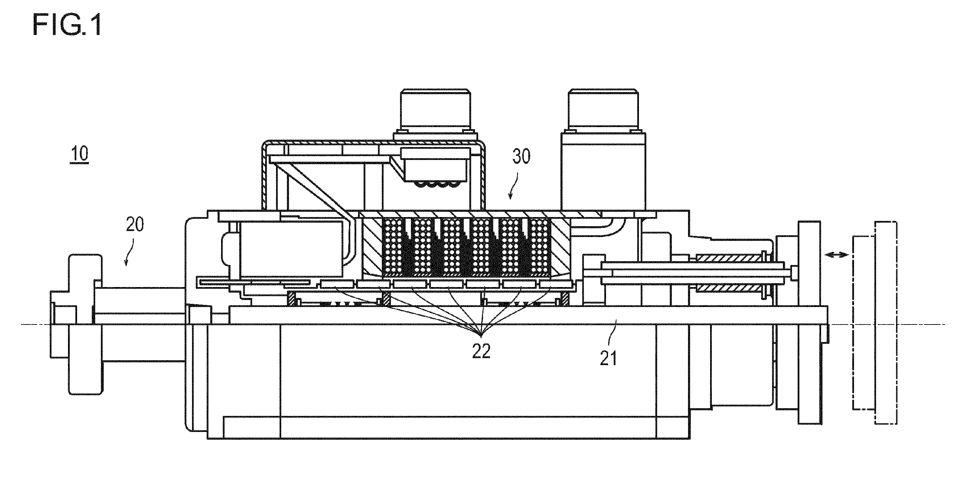

FIG. 1 is a partial cross section showing an example of a cylinder linear motor. One side from a center line as a border, of a linear motion shaft is shown in cross section.

A cylinder linear motor 10 has a movable element 20 which is a field system and can move linearly and a stator 30 as an armature. Although the cylinder linear motor 10 includes various components such as a sensor and a bearing, the detailed configuration will not be described.

The movable element 20 has a linear motion shaft 21 and magnets 22. The linear motion shaft 21 is supported so as to be linearly reciprocatable. In the periphery of the linear motion shaft 21, a plurality of permanent magnets 22 are attached in the axial direction. The plurality of magnets 22 are attached to the linear motion shaft 21 so that N and S poles are alternately arranged. The linear motion shaft 21 and the magnets 22 are inserted in the stator 30.

### (First Embodiment)

The detailed configuration of the stator 30 according to the first embodiment will be described.

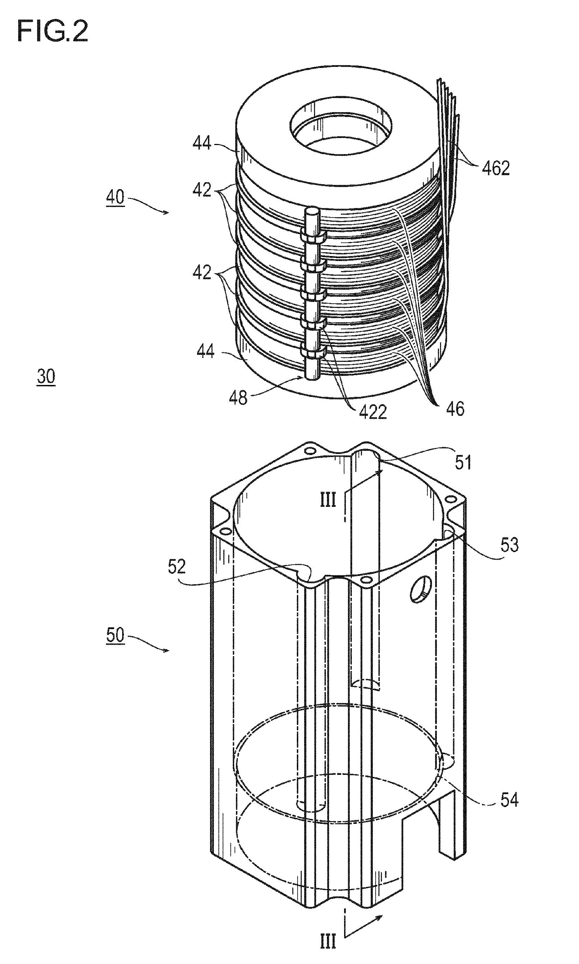

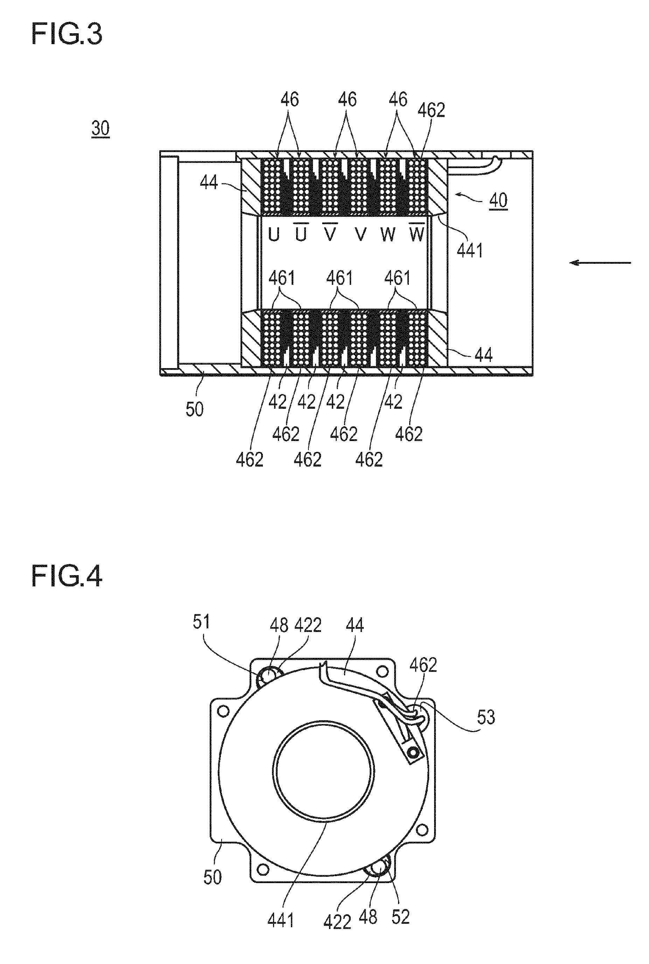

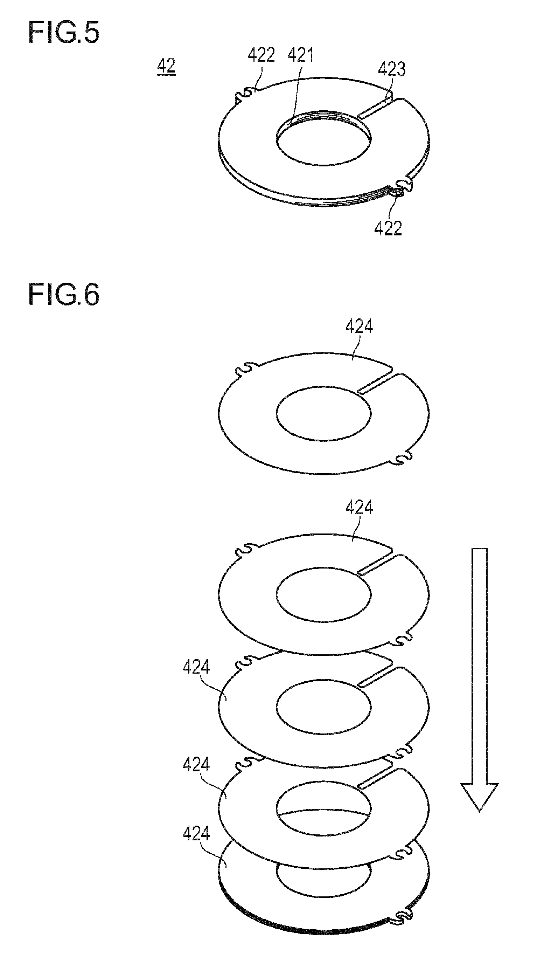

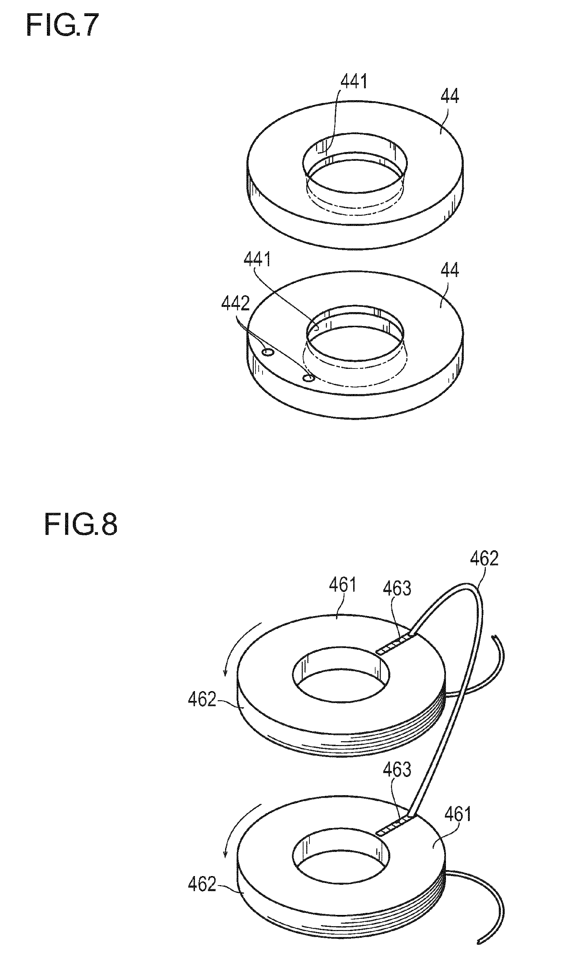

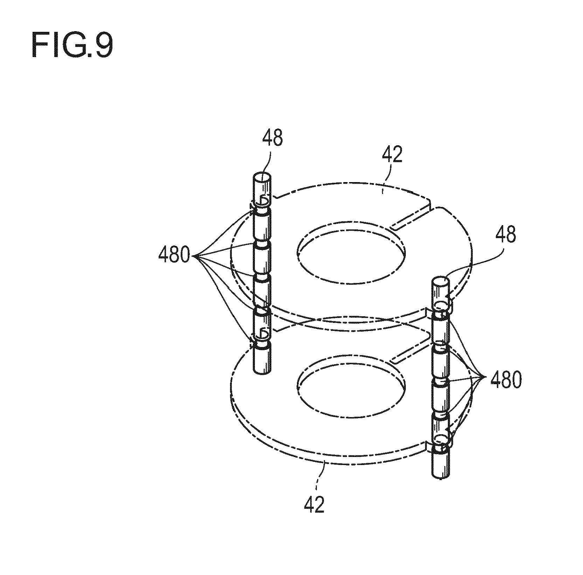

FIG. 2 is an exploded perspective view of the stator, FIG. 3 is a cross section of the stator, FIG. 4 is a front view of the stator seen from the arrow direction of FIG. 3, FIG. 5 is a perspective view of a center core body disposed in the center, FIG. 6 is an exploded perspective view of the center core body, FIG. 7 is a perspective view of end-part core bodies disposed at both ends, FIG. 8 is a perspective view of a winding coil, and FIG. 9 is a perspective view of a positioning rod. FIG. 3 is a cross section taken along line III-III of FIG. 2 in a state where a core assembly is disposed in a frame.

As shown in FIGS. 2 and 3, the stator 30 is obtained by disposing a core assembly 40 in a frame 50. The core assembly 40 includes center core bodies 42, end-part core bodies 44, winding coils 46, and a positioning rod 48 which are assembled. In the first embodiment, an assembly of the center core bodies 42 and the positioning rod 48 is defined as a stator core.

With reference to FIG. 4, seeing from the opening side of the frame 50, the cylindrical part of the outer shape of the core assembly 40 matches the inner periphery of the frame 50 without a gap. Three housing grooves are formed in the inner periphery of the frame 50, and a wire of the winding coil 46 and fitting parts 422 which will be described later are housed in the grooves.

As shown in FIG. 2, the center core bodies 42 are stacked in the center of the core assembly 40. As shown in FIG. 5, the center core body 42 is formed in a flat plate shape, and a hole 421 in which the movable element 20 can be inserted in a direction orthogonal to the flat plate is formed. In the outer circumference of the center core body 42, the fitting part422 (second fittingpart) for fitting with the positioning rod 48 is provided. In the center core body 42, a notch 423 is formed from the outer circumference toward the inner circumference.

As shown in FIG. 6, the center core body 42 is formed by stacking and adhering a plurality of plate members 424 having the same shape. For example, eight plate members 424 are adhered to form a single center core body 42.

The end-part core bodies 44 are stacked at both ends of the core assembly 40 as shown in FIG. 2. As illustrated in FIG. 7, each of the end-part core bodies 44 is formed in a flat plate shape, and a hole 441 in which the movable element 20 can be inserted is formed in a direction orthogonal to the flat plate. As shown in FIG. 3, the hole 441 is formed so as to have the same diameter until some midpoints and, from the some midpoints, and the diameter increases to both ends of the core assembly 40. The configuration that the diameter of the hole 441 increases toward both ends is a measure against cogging. In one of the end-part core bodies, two taps 442 are formed. The taps 442 are used to fix the lead wire and to ground the wire.

The winding coil 46 is formed in such a manner that, as shown in FIG. 3, a conductive wire 462 is wound in an annular shape around a core 461 made of resin which has discs disposed at both cylindrical ends. In the cores 461, holes in which the movable element 20 can be inserted like the holes 421 and 441 in the center core bodies 42 and the end-part core bodies 44 are formed. The winding coils 46 are disposed in the core bodies 42 and 44. When the motor is used as the linear motor shown in FIG. 1, current is passed to excite the winding coils 46. In the example shown in the diagram, six winding coils 46 are prepared, and excitation currents U, V, and W of three phases which are deviated by 120 degrees in electric angle are passed to the winding coils 46. For example, in FIG. 3, the excitation current of the U phase is passed to the two winding coils 46 at the left side, the excitation current of the V phase is passed to the two winding coils 46 in the center, and the excitation current of the W phase is passed to the two winding coils 46 at the right side. In the two winding coils 46 to which the excitation current of the same phase is passed, the excitation current is passed in directions opposite to each other.

The two winding coils 46 to which the excitation current of the same phase is passed are formed, as shown in FIG. 8, by winding the same single conductive wire 462 around the different cores 461. The conductive wire 462 extends out from one of the cores 461 from a notch 463 formed in the core 461 to the other core 461. In the posture shown in FIG. 8, the conductive wire 462 is wound around the cores 461 in the same winding direction. However, when the coils are assembled as the core assembly 40 as shown in FIG. 2, the winding coils 46 sharing the same conductive wire 462 are disposed so that the winding directions are opposite.

As shown in FIG. 9, the positioning rod 48 extends in a rod shape. In the positioning rod 48, apluralityof recesses (first fitting parts) 480 are formed at predetermined intervals in the extension direction. The recess 480 is formed by making a part of the column-shaped positioning rod 48 slightly smaller and to have width which is the same as the thickness of the fitting part 422 in the center core body 42. In the recess 480, the fitting part 422 of the center core body 42 can be fit. When the fitting part 422 of the center core body 42 fits in each of the recesses 480, the center core body 42 is positioned according to the intervals of the recesses 480. The predetermined intervals at which the recesses 480 are formed are desired intervals to dispose the center core body 42 and are determined in consideration of the number of turns and the occupation ratio of the winding coil 46.

Referring again to FIG. 2, the inner peripheral face of the frame 50 is formed in a cylindrical shape so that the cylindrical core assembly 40 can be housed. The frame 50 is formed of a magnetic material. In the inner peripheral face of the frame 50, three housing grooves 51 to 53 are formed. The housing grooves 51 and 52 are formed to house the fitting parts 422 of the center core body 42 in which the positioning rod 48 is fit. The housing grooves 51 and 52 are formed to some midpoint in the cylinder in consideration of the position in which the core assembly 40 is disposed. The housing grooves 53 are formed to pass the conductive wire 462 led from the wiring coil 46. The housing groove 53 is formed to some midpoint in the cylinder on the basis of the position of the winding coil 46 when the core assembly 40 is housed in the frame 50.

In FIG. 2, a step 54 is provided in a position deeper than the housing grooves 51 to 53 by the amount of the thickness of the end-part core body 44. The diameter of the cylinder of the frame 50 changes from the step 54 as a border. In the lower side in the diagram of the step 54, the diameter of the cylinder is smaller. Consequently, at the time of disposing the core assembly 40 in the frame 50, the end-part core body 44 on the lower side is put on the step 54. The core assembly 40 is positioned in the frame 50.

Next, a method of assembling the stator 30 will be described.

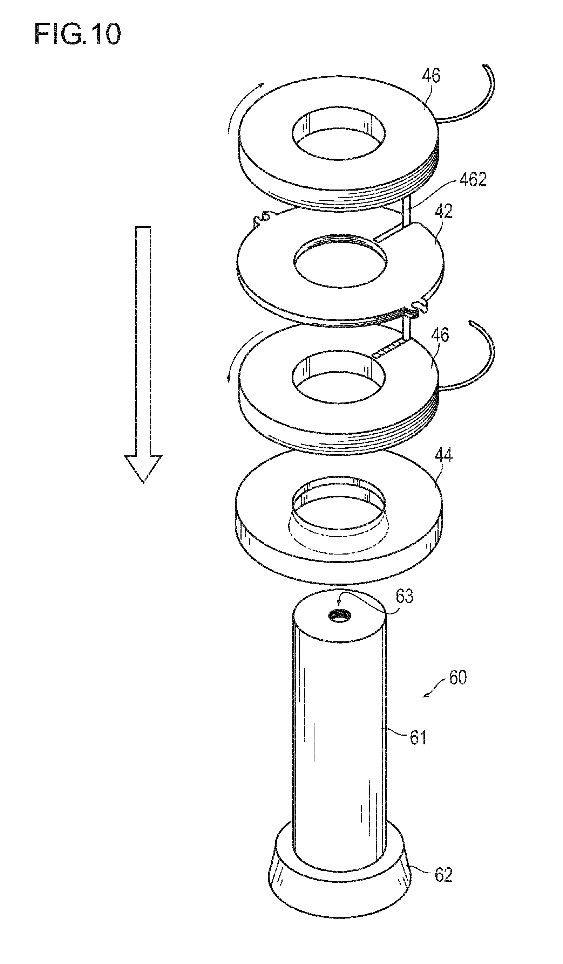

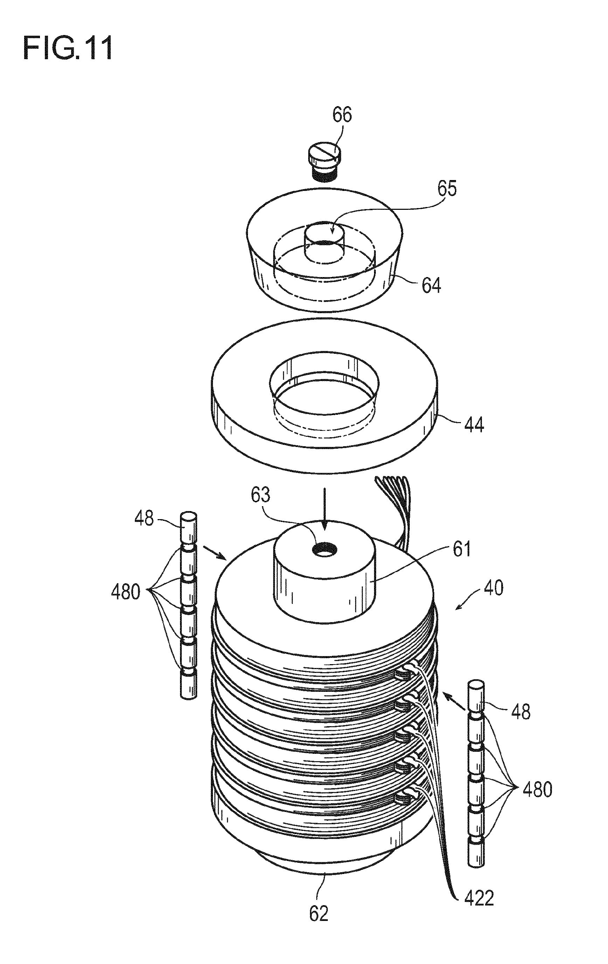

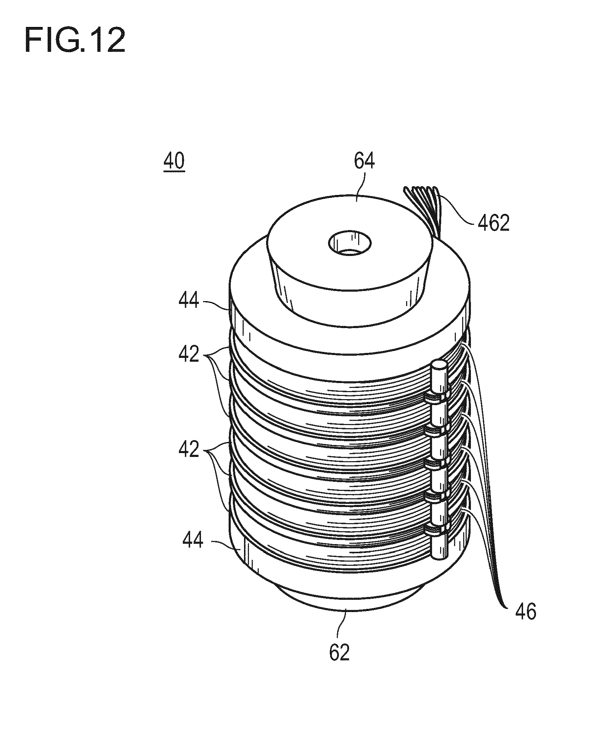

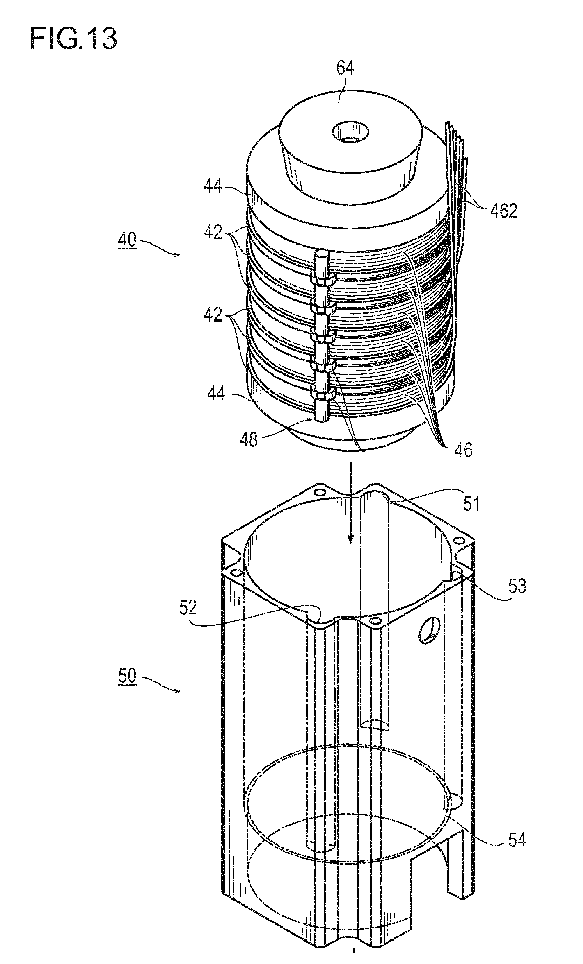

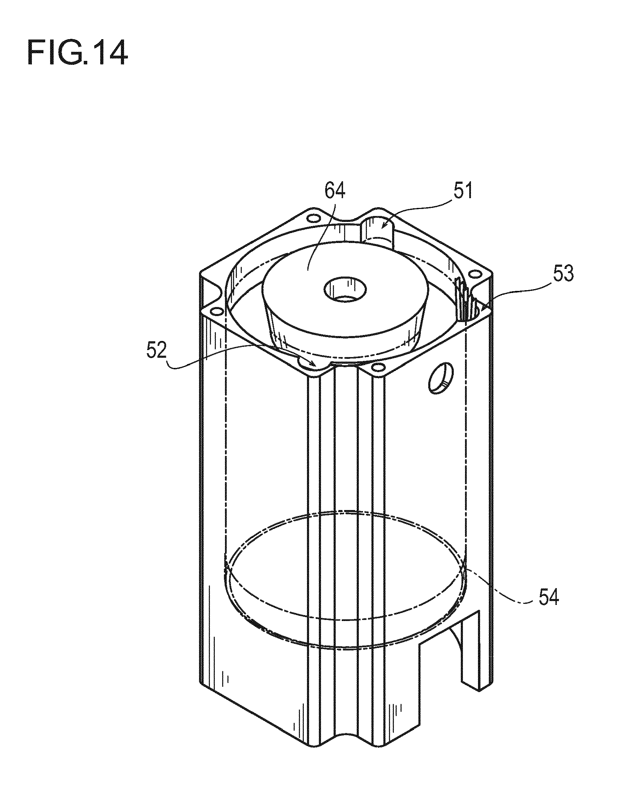

FIG. 10 is a perspective view showing a state of attaching components to a core member. FIG. 11 is a perspective view showing a state of assembling a core assembly on the core member. FIG. 12 is a perspective view of the core assembly assembled on the core member. FIG. 13 is a perspective view showing a state of inserting the core assembly with the core member into a frame. FIG. 14 is a diagram showing a state where resin is poured in the frame.

First, a core member stand 60 shown in FIG. 10 is prepared. The core member stand 60 has a cylindrical part 61 and a base 62. The cylindrical part 61 is formed in a cylindrical shape and has an outer shape matching the inner diameter of each of the center core bodies 42, the end-part core bodies 44, and the winding coils 46. To the lower part of the cylindrical part 61, the base 62 is attached. A screw hole 63 is formed in an upper end of the cylindrical part 61.

Around the cylindrical part 61 of the core member stand 60, the end-part core body 44 is put. After that, the winding coil 46 and the center core body 42 are alternately put. In the case where the two winding coils 46 share the same conductive wire 462 as shown in FIG. 10, the winding coils 46 are put around the cylindrical part 61 so that their winding directions become opposite. The conductive wire 462 commonly provided for the winding coils 46 passes through the notch 423 in the center core body 42.

After all of the winding coils 46 are put around the cylindrical part 61 as shown in FIG. 11, the final end-part core body 44 is also put. The positions of the fitting parts 422 of the center core bodies 42 are aligned, and the positioning rods 48 are fit. In this state, a core member cap 64 is put on the end-part core body 44 and is engaged with the upper part of the cylindrical part 61 projected from the end-part core body 44. A through hole 65 is formed in the core member cap 64. Also in a state where the core member cap 64 is attached to the cylindrical part 61, the screw hole 63 in the cylindrical part 61 is exposed. A screw 66 is inserted in the through hole 65 and screwed in the exposed screw hole 63. By the screw 66, the core member stand 60 and the core member cap 64 sandwich the core assembly 40 from both ends in the stack direction to fix the position.

As shown in FIG. 12, the core assembly 40 attached to the core member made by the core member stand 60 and the core member cap 64 is obtained.

As shown in FIG. 13, the core assembly 40 to which the core member is attached is inserted in the frame 50. At the time of insertion, the frame 50 is heated and expanded in advance. The posture of the core assembly 40 is determined so that the housing grooves 51 and 52 and the fitting part 422 and the positioning rod 48 of the center core body 42 are positioned and the conductive wire 462 of the winding coil 46 and the housing groove 53 are positioned. The core assembly 40 is allowed to enter the frame 50 until the end-part core body 44 comes into contact with the step 54. When the temperature of the frame 50 decreases, the core assembly 40 is fixed in the frame 50.

In a state where the core assembly 40 is disposed in the frame 50 as shown in FIG. 14, resin is poured in from above in the diagram. For example, resin is poured in to a position indicated by alternate long and two short dashes line in the diagram. The housing grooves 51 to 53 are opened to the winding coils 46. However, the end-part core body 44 on the lower side of the core assembly 40 is fixed to the frame 50 above the step 54. Therefore, since the lower part of the frame 50 is hermetically closed by the core assembly 40, the resin does not leak to the lower part of the frame 50 via the housing grooves 51 to 53. Consequently, the stator 30 in the state shown in FIG. 14 is disposed in a not-shown vacuum chamber, and the vacuum chamber is vacuumized. The air in the housing grooves 51 to 53 is evacuated to the outside, the resin enters the housing grooves 51 to 53 by the amount, and penetration of the resin to the winding coil 46 is also advanced. After that, the pressure in the vacuum chamber is reset to atmospheric pressure. At this time, the air presses the resin, and penetration of the resin in to the housing grooves 51 to 53 is further advanced. In such a manner, the gap between the winding coil 46 and the frame 50 is completely filled.

With the above configuration, the following effects are obtained.

In the first embodiment, when the recess 480 (first fitting part) of the positioning rod 48 and the fitting part 422 (second fitting part) of the center core body 42 are fit, the center core bodies 42 can be easily and accurately positioned according to the predetermined intervals of the recesses 480 of the positioning rod 48. As a result, the slot pitches between the center core bodies and the end-part core bodies 44 can be determined accurately. It is sufficient to form the fitting part 422, for example, in the outer periphery of the disc-shaped center core bodies 42. Therefore, without making the shape of the center core body 42 excessively complicated, the center core body 42 can be manufactured relatively at low cost by, for example, press work or the like.

Since the center core bodies 42 and the end-part core bodies 44 are just disposed in the frame 50, the configuration is simple and manufacture is easy. Since the center core bodies 42 and the end-part core bodies 44 matching the inner peripheral shape of the frame 50 are provided, a magnetic circuit can be reliably closed by the center core bodies 42, the end-part core bodies 44, and the frame 50. Since the magnetic circuit is closed by the frame 50 as a casing, the space for disposing the winding coil 46 can be sufficiently assured. In addition, the winding coils 46 are held between the center core bodies 42 and the end-part core bodies 44 each having the flat plate shape, so that the winding coils 46 are held effortlessly, and the shape is not easily lost.

The housing grooves 51 and 52 are formed in the inner peripheral face of the frame 50, and the positioning rod 48 and the recess 480 can be housed in the housing grooves 51 and 52. Since the housing grooves 51 and 52 are formed at the corners of the frame 50, it is unnecessary to form the frame 50 largely for the housing grooves 51 and 52, and the space can be effectively utilized.

The housing groove 53 is formed in the inner peripheral face of the frame 50, and the conductive wire 462 led from the winding coil 46 can be easily led. Further, since the connection coupling part of the lead wires of the respective phases (U, V, and W) exists in the frame 50, it is reliably protected.

Since the center core body 42 is formed by stacking the plurality of plate members 424, by changing the number of members stacked, a design change such as adjustment of length of the stator 50 and a change in the number of turns of the winding coil 46 can be easily realized. Since all of the plate members 424 have the same shape, they can be formed by the same mold. As a result, the center core bodies 42 can be manufactured at low cost.

The end-part core bodies 44 disposed at both ends of the core assembly 40 are not formed by stacking a plurality of plate members. In the end-part core bodies 44, the diameters of the holes 441 are not constant. Consequently, when the end-part core bodies 44 are formed by stacking plate members like the center core bodies 42, a plurality of molds are necessary. The end-part core bodies 44 formed by cutting without using molds can be manufactured at lower cost.

The notch 423 is provided in the center core body 42, and the conductive wire 462 of the winding coil 46 passes through the notch 423. Therefore, the winding coils 46 on both sides of the center core body 42 can commonly use the same conductive wire 462. Since it is sufficient to manufacture three winding coils 46 in the foregoing embodiment, manufacture of the winding coil 46 is facilitated.

Although the case of using five center core bodies 42 and six winding coils 46 has been described in the first embodiment, the invention is not limited to the case. The numbers can be properly changed.

Although the example of fitting the fitting part 422 of the center core body 42 to the recess 480 formed slightly smaller than the columnar positioning rod 48 has been described, the invention is not limited to the example. The recess 480 may be formed by parallely cutting (D cutting) a part of the columnar positioning rod 48. The positioning rod 48 is not limited to the columnar shape but may have a prism shape. As long as slot pitches among a plurality of center core bodies 42 and slot pitches between the center core body 42 and the end-part core body 44 can be positioned by combining at least shapes (first fitting parts) formed at predetermined interval in the positioning rod 48 and shapes (second fitting parts) formed in the outer periphery of the center core body 42, the first and second fitting parts may have arbitrary shapes.

### (Second Embodiment)

A precondition of a second embodiment is the configuration of the first embodiment, and the second embodiment has a configuration almost similar to that of the first embodiment. In the following, therefore, a configuration different from that of the first embodiment will be mainly described. The same reference numerals are used for configurations similar to those of the first embodiment and their description will not be repeated. In the second embodiment, a member obtained by assembling the center core bodies 42, end-part core bodies 74, and a positioning rod 78 is defined as a stator core.

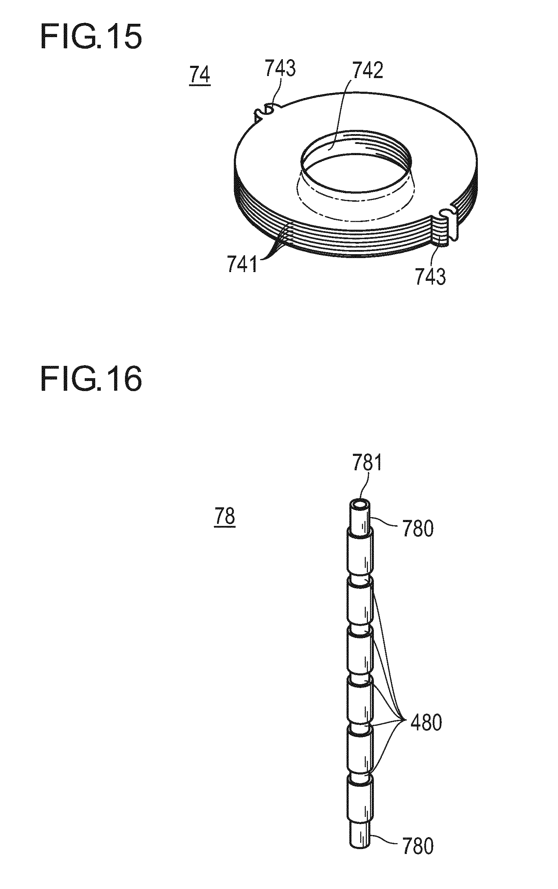

FIG. 15 is a perspective view showing an end-part core body of the second embodiment, and FIG. 16 is a perspective view of a positioning rod of the second embodiment.

In the second embodiment, as shown in FIG. 15, the end-part core body 74 is also formed by stacking a plurality of plate members 741.

In the end-part core body 74, a hole 742 having a shape similar to that of the hole 441 of the first embodiment is formed. The hole 742 is formed to have a so-called taper structure in which the diameter increases from some midpoint. Therefore, the holes in the plate members 741 constructing the end-part core body 74 are formed to have a tapered structure whose diameter varies according to stacking positions.

In the end-part core body 74 of the second embodiment, like in the center core body 42, fitting parts 743 are formed. The fitting parts 743 can be fit in recesses 780 formed at both ends of the positioning rod 78 shown in FIG. 16. In a recess in the center of the positioning rod 78, the center core body 42 can be fit.

Taps 781 are formed in the recesses 780 at both ends of the positioning rod 78. The taps 781 are used for the purposes of fixing of a lead wire and grounding of a wire.

The positioning rod 78 is longer than the positioning rod 48 of the first embodiment. Not only the center core bodies 42 but also the end-part core bodies 74 are fit to the positioning rod 78. Therefore, the housing grooves 51 and 52 in the frame 50 for holding the core assembly 40 have to be also formed long. In the first embodiment, the housing grooves 51 and 52 are formed so as to extend to a position above the step 54 only by the amount of the thickness of the end-part core body 44 (refer to FIG. 2). However, in the second embodiment, the housing grooves 51 and 52 are formed to the same position as the step 54.

As described above, in the second embodiment, the end-part core body 74 is also formed by stacking the plate members 741. The plate member 741 can be formed by press work. By forming the end-part core body 74 from the plate members 741, the embodiment is suitable for mass production of the core.

In the second embodiment, the end-part core bodies 74 are also fit to the positioning rod 78. Therefore, the center core bodies 42 and the end-part core bodies 74 can be easily integrated by the positioning rod 78, and positioning can be performed more reliably.

Although the case of forming the taps 781 in the positioning rod 78 and using them for grounding the wire has been described in the embodiment, the invention is not limited to the case. In a manner similar to the first embodiment, taps may be formed in the end-part core body 74 and used to fix the lead wire and to ground the line. In this case, in each of the plate members 741 constructing the end-part core body 74, holes corresponding to the taps 781 are formed.

### (Third Embodiment)

In the first embodiment, the core assembly 40 is thermal-inserted in the frame 50 to form the stator 30. In a third embodiment, a stator is formed by surrounding the core assembly with a cover in place of the frame 50. The stator of the third embodiment is different from those of the first and second embodiments with respect to the shape but is similar to the first and second embodiments with respect to the function of inserting the movable element 20 and making the movable element 20 move. Therefore, the detailed description of the movable element will not be repeated, and only the configuration of the stator will be described.

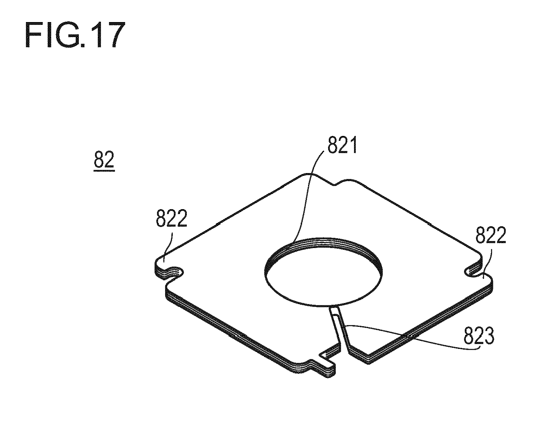

FIG. 17 is a perspective view showing a center core body of the third embodiment.

As shown in FIG. 17, a center core body 82 is formed in a flat plate shape, and a hole 821 in which the movable element 20 can be inserted is formed in a direction orthogonal to the flat plate. In the outer periphery of the center core body 82, fitting parts 822 (second fitting parts) to be fit to positioning rods are provided. In the center core body 82, a notch 823 is formed from the outer periphery toward the inner periphery. The center core body 82 is formed by stacking and adhering a plurality of plate members having the same shape. For example, by adhering eight plate members, a single center core body 82 is formed.

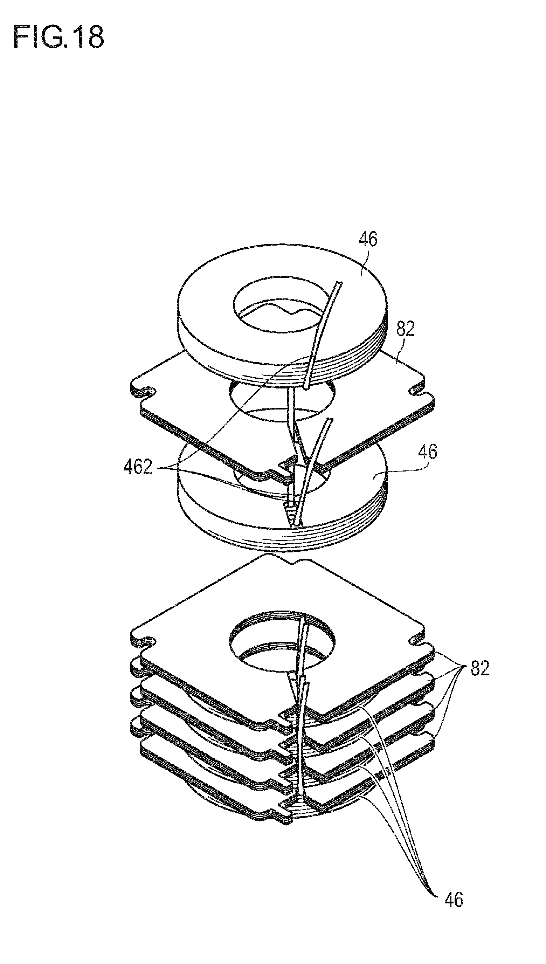

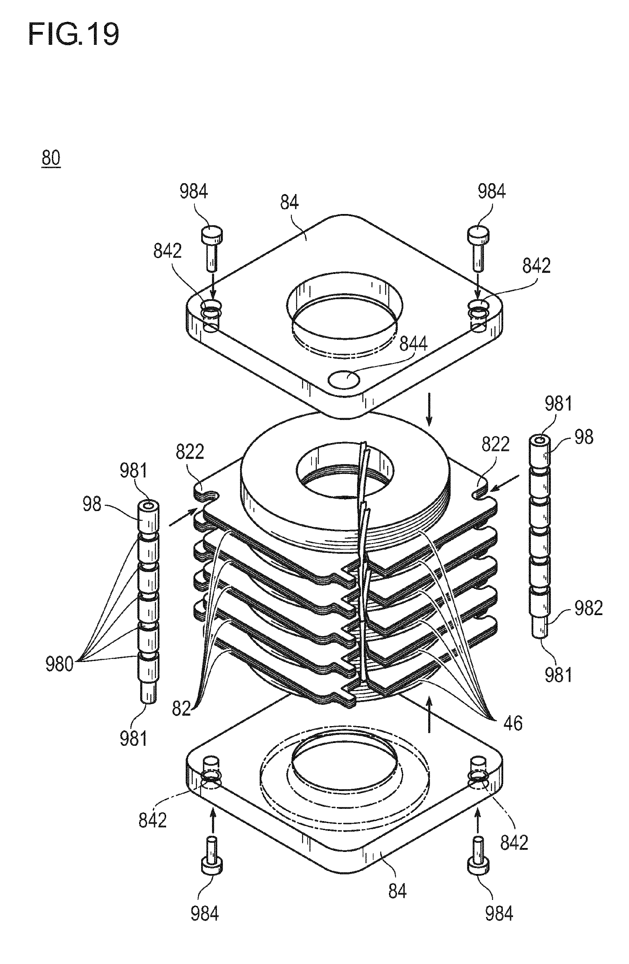

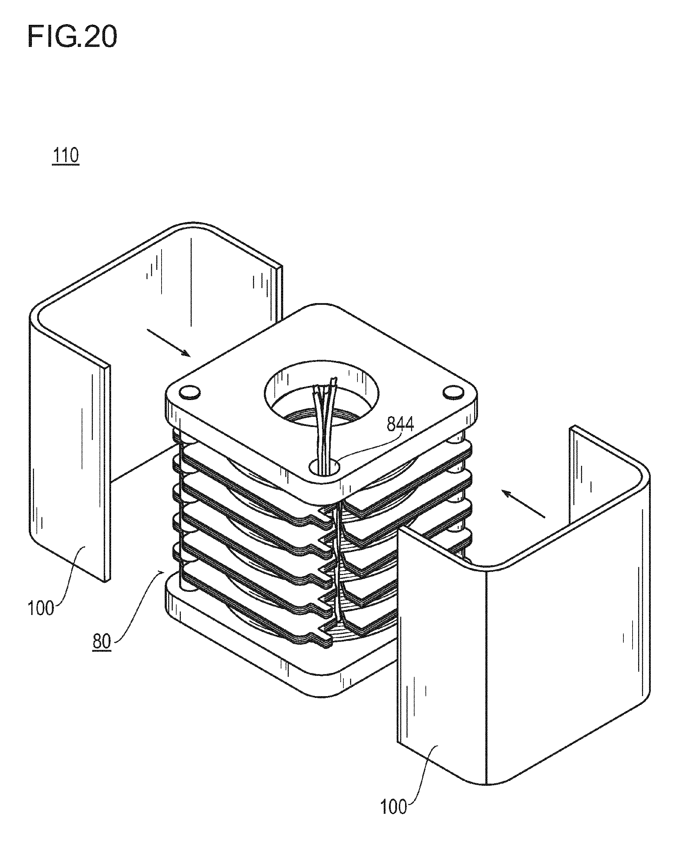

FIG. 18 is a perspective view showing a process of assembling a core assembly, FIG. 19 is a perspective view showing a state of assembling the core assembly, and FIG. 20 is a perspective view showing a state of attaching a cover to the core assembly. In FIGS. 18 to 20, the winding coils 46 similar to those of the first embodiment are used.

As shown in FIG. 18, the winding coils 46 and the the center core bodies 82 are stacked alternately. The winding coils 46 connected to each other via the conductive wire 462 and adjacent to each other in the stack direction are stacked so that their winding directions are opposite to each other. The conductive wire 462 extending between the two winding coils 46 passes through the notch 823 in the center core body 82. The conductive wires 462 led from the winding coils 46 are collected in the space of the corner on the notch 823 side of the center core bodies 82. Since the center core bodies 82 are formed in the same shape, they have uniformly space on the notch 823 side. This part is used as a space for housing the conductive wires 642.

As shown in FIG. 19, a positioning rod 98 is fit in the fitting part 822 in each of the center core bodies 82. The positioning rod 98 has recesses 980 (first fitting parts), taps 981, and insertion parts 982. The recesses 980 are formed at predetermined pitch. The fitting parts 822 of the center core bodies 82 can be fit in the recesses 980. The taps 981 are formed in both end faces of the positioning rod 98. The insertion part 982 is formed in a shape which can be inserted in a hole 842 formed in the end-part core body 84.

After the center core bodies 82 are positioned by the positioning rod 98, end-part core bodies 84 are disposed on the winding coils 46 at both ends. The end-part core bodies 84 on the output side or the opposite side of the movable element are formed in different shapes. However, they will be described using the same reference numeral.

The end-part core body 84 has the hole 842 and a hole 844. The hole 842 is formed in two diameters as shown by an alternate long and short dash line in FIG. 19. The two diameters are for a part to be fit with the insertion part 982 in the positioning rod 98 and a part in which the head of a screw 984 is housed. In at least the hole 842 in the end-part core body 84 as one of the holes, the insertion part 982 of the positioning rod 98 can be inserted. By inserting at least one end of the positioning rod 98 in the end-part core body 84, the end-part core body 84 and the positioning rod 98 can be unconditionally positioned. The taps 981 of the positioning rod 98 are coupled by the screws 984 via the holes 842 in the end-part core bodies 84 which are positioned. As a result, a core assembly 80 in which the center core bodies 82, the end-part core bodies 84, and the positioning rods 98 are fixed to one another is formed. In the hole 844 formed in one of the end-part core bodies 84, the conductive wires 462 of the winding coils 46 are passed in a lump.

Finally, as shown in FIG. 20, a cover 100 is attached from both sides of the core assembly 80. The cover 100 is formed by folding a plate body made of a magnetic material. The cover 100 is fixed, for example, by screwing to the core assembly 80. In this case, although not shown in FIG. 20, for example, a screw hole is formed in the outer periphery of the end-part core body 84 and a hole is formed in a corresponding position in the cover 100. By fixing a screw in the screw hole via the hole in the cover 100, the cover 100 is fixed to the core assembly 80. The fixed two covers 100 surround the periphery of the core assembly 80, that is, the outer periphery of the winding coils 46.

The cover 100 is fixed to the core assembly 80 and, in this state, held by a jig. A thermoset resin is poured in the gap and the like between the covers 100 and heated so as to be set, thereby obtaining a stator 110.

As described above, in the third embodiment, only by forming the fitting part 822 having a semicircular shape near the corner of each of the center core bodies 82 and fitting the positioning rod 98 in the fitting part 822, the center core bodies 82 can be easily disposed at predetermined pitches. The fitting part 822 can be easily formed by notching a part in a U shape near a corner of the center core body 82.

Since the fitting part 822 is formed in the corner of the center core body 82, the positioning rod 98 to be fit can be disposed in the open space at the corner of the stator 110. It is unnecessary to specially provide space for the positioning rod 98, so that the size of a motor does not increase.

Since the conductive wires 462 of the winding coils 46 are led in a lump from the hole 844, they can be easily connected to a not-shown power supply. Since the conductive wires 462 are housed in a lump in the open space at the corner of the stator 110, it is unnecessary to specially provide a space for housing the conductive wires 462, so that the size of a motor does not increase.

The first to third embodiments are concrete modes of the present invention. The present invention can be realized in any mode as long as the center core bodies and/or the end-part core bodies are fit at predetermined intervals. Therefore, the invention can be applied not only to the center/end-part core bodies having a circular or square shape as in the first to third embodiments but also to the other shapes.

The entire disclosure of Japanese Patent Application No. 2011-207605 filed on September 22, 2012 including specification, claims, drawings and an abstract are incorporated herein by reference in its entirety.

## Claims

1. A stator core for use in a cylinder linear motor, comprising:
a positioning rod which extends in a rod shape and in which a plurality of first fitting parts are formed at predetermined intervals in an extension direction; and
a plurality of core bodies each of which is formed in a flat plate shape and in which a hole through which a movable element can be inserted is formed in a direction orthogonal to the flat plate,
wherein second fitting parts which fit in the first fitting parts are provided in an outer circumference of the plurality of core bodies, and
when the second fitting parts fit in the first fitting parts, the core bodies are positioned at the predetermined intervals.

2. The stator core according to claim 1, wherein the first fitting parts are recesses formed at the predetermined intervals in the positioning rod, and
the second fitting parts fit in the recesses.

3. A stator comprising:
the stator core according to claim 1 or 2;
a frame formed in a cylinder shape of a magnetic material;
and
a plurality of winding coils each formed by winding a conductive wire in an annular shape and disposed between the plurality of core bodies,
wherein the plurality of core bodies each having an outer circumference shape matching an inner circumference shape of the cylinder shape are disposed at the predetermined intervals in the frame.

4. The stator according to claim 3, wherein in the inner peripheral face of the cylinder shape of the frame, first housing grooves for housing the positioning rod and the second fitting parts which fit in the positioning rod when the core bodies are disposed on the inside of the frame are formed.

5. The stator according to claim 3 or 4, wherein in the inner peripheral face of the cylinder shape of the frame, second grooves for leading conductive wires of the winding coils to the outside of the frame are formed.

6. The stator according to any one of claims 3 to 5, wherein at least one of the plurality of core bodies is formed by stacking a plurality of plate members.

7. The stator according to claim 6, wherein each of the core bodies other than core bodies disposed at both ends in the plurality of core bodies is formed by stacking a plurality of plate members.

8. The stator according to any one of claims 3 to 7, wherein a notch is formed from the outer circumference toward the inner circumference in at least one of the plurality of core bodies,
two winding coils disposed on both sides of the core body in which the notch is formed are obtained by winding the same conductive wire in opposite directions, and
the conductive wire in the two winding coils passes through the notch in the core body and connects the two winding coils.

9. The stator according to any one of claims 3 to 8, where a gap between the frame and the winding coils is filled with resin.

10. A stator comprising:
the stator core according to claim 1 or 2;
a plurality of winding coils each formed by winding a conductive wire in an annular shape and disposed between the plurality of core bodies; and
a cover formed of a magnetic material and surrounding a core assembly formed by the winding coils and the stator core.
